# EUROPEAN PATENT SPECIFICATION

(11) **EP 1 183 974 B1**
(45) Date of publication and mention of the grant of the patent: **26.05.2004**
(21) Application number: 01917678.3
(22) Date of filing: 30.03.2001
(51) Int. Cl.: A47J 27/17

(54) **COOKER**
KOCHGERÄT
CUISEUR

(30) Priority: 04.04.2000 JP 2000102776; 04.04.2000 JP 2000102788; 04.04.2000 JP 2000102789
(43) Date of publication of application: 06.03.2002
(73) Proprietor: Kajiwarakogyo Co., Ltd, Tokyo 111-0036 (JP)
(72) Inventor: KAJIWARA, Tokuji, Tokyo 111-0036 (JP)
(74) Representative: Hertz, Oliver, Dr.
(86) International application number: PCT/JP2001/002724
(87) International publication number: WO 2001/074210

(56) References cited:
- JP-A- 7 107 925
- JP-A- 7 213 236
- JP-A- 8 056 590
- JP-A- 11 178 714
- JP-A- 2000 093 095
- JP-A- 2000 253 993
- JP-B1- 3 026 434
- JP-B2- 2 944 035
- JP-B2- 3 076 321
- JP-B2- 63 060 648
- JP-U- 62 024 396

## Description

### BACKGROUND OF THE INVENTION

### 1. Field of the Invention

The present invention relates to a cooking apparatus capable of achieving hybrid cooking with high-temperature gas that heats the bottom of a cooking vessel and high-calorie steam that heats the body of the cooking vessel.

### 2. Description of the Related Art

A conventional cooking apparatus has a cooking vessel for receiving and cooking food materials and a gas heater arranged under the bottom of the cooking vessel to heat the same. Processes of cooking, for example, frying food materials such as vegetables with the prior art will be explained.

A large quantity of vegetables are charged into the cooking vessel up to the top thereof. The gas heater heats the bottom of the cooking vessel to a high temperature. As the vegetables are fried, they shrink from the top of the cooking vessel toward the bottom thereof and are fried at the bottom with the gas heater.

Frying a large quantity of food materials such as vegetables only with high-temperature heat generated by the gas heater arranged under the bottom of the cooking vessel takes a long time. Namely, it takes a long time to reduce the volume of the food materials to the bottom of the cooking vessel. If a cooking temperature is increased to shorten the cooking time, the food materials will burn and stick to the inside of the cooking vessel.

A water content in the cooking vessel, or the ratio of the weight of water within and around food materials in the cooking vessel to the weight of all materials in the cooking vessel, is an important factor to burn food materials in the cooking vessel, and therefore, it must correctly be controlled during cooking. When boiling down food materials to cook bean paste, sauce, or soup in the cooking vessel, a water content in the cooking vessel greatly affects the taste of the food. Accordingly, the timing of stopping the boiling must correctly be controlled. To achieve this, the prior art forces workers to sample and taste food materials boiled in the cooking vessel carefully. This method frequently destabilizes the quality of a cooked state of the food materials.

To correctly control a water content, workers must always pay attention to the conditions of food materials in the cooking vessel until the completion of cooking and must have masterly skill to manage this. Shortening a cooking time to, for example, a half of a usual cooking time makes the monitoring of water content difficult for workers. A simple carelessness may result in missing a correct water content. Accordingly, the prior art must limit a cooking speed to correctly control a water content.

JP-B1-3026434 discloses a cooking apperatus comprising two heat exchanging jackets using steam to heat the vessel, one jacket is arranged under the bottom of the vessel and another one is arranged on the outer peripheral side of the vessel.

JP-A-8056590 discloses a heating and cooking method and device to automatically finish a heated and cooked food product into desired physical properties and a desired taste.

### SUMMARY OF THE INVENTION

An object of the present invention is to provide a cooking apparatus capable of greatly increasing the speed of cooking, thereby enabling high-speed high-temperature cooking, and correctly and simply controlling a water content, while suppressing burning.

The object is solved by a cooking vessel comprising the features of claim 1. Advantageous embodiments of the invention are defined in the dependent claims.

One aspect of the present technique provides a cooking apparatus comprising a cooking vessel for receiving and cooking food materials, bottom heating means arranged under the bottom of the cooking vessel, for heating the bottom of the cooking vessel, a heat exchanging jacket arranged in closed cross section on the wall surface on the outer peripheral side rather than the bottom of the cooking vessel, so that a thermal fluid is supplied into the closed cross section thereof, thereby enabling heat exchange with the wall, and fluid supply and drain means for supplying and draining the thermal fluid to and from the heat exchanging jacket, with the bottom heating means and the fluid supply and drain means being separately controlled.

Another aspect of the present invention provides a cooking apparatus comprising a cooking vessel for receiving and cooking food materials, bottom heating means arranged under the bottom of the cooking vessel, for heating the bottom of the cooking vessel, a heat exchanging jacket arranged in closed cross section on the wall surface on the outer peripheral side rather than the bottom of the cooking vessel, so that a thermal fluid is supplied into the closed cross section thereof, thereby enabling heat exchange with the wall, fluid supply and drain means for supplying and draining the thermal fluid to and from the heat exchanging jacket, weight detection means for supporting integrally at least the cooking vessel and heat exchanging jacket and detecting the gross weight of the cooking vessel and the heat exchange jacket, weight change memory means for storing, as a reference value beforehand, a weight change corresponding to a water-content change at the time of heating, in order to achieve the cooking object of food materials charged into the cooking vessel, and drive control means for controlling the drive of at least the bottom heating means, based on the change in the gross weight detected by the weight detection means and the reference value.

Still another aspect of the present invention provides a cooking apparatus comprising a cooking vessel for receiving and cooking food materials, bottom heating means arranged under the bottom of the cooking vessel, for heating the bottom of the cooking vessel, a heat exchanging jacket arranged in closed cross section on the wall surface on the outer peripheral side rather than the bottom of the cooking vessel, so that a thermal fluid is supplied into the closed cross section thereof, thereby enabling heat exchange with the wall, fluid supply and drain means for supplying and draining the thermal fluid to and from the heat exchanging jacket, weight detection means for supporting integrally at least the cooking vessel and the heat exchanging jacket and detecting the gross weight of the cooking vessel and the heat exchange jacket, weight change memory means for storing a weight change as a reference value beforehand, in order to achieve the cooking object without causing burning of food materials charged into the cooking vessel; and drive control means for controlling the drive of the heating means, based on the change in the gross weight detected by the weight detection means and the reference value.

Still another aspect of the present invention provides a cooking apparatus comprising a cooking vessel for receiving and cooking food materials, bottom heating means arranged under the bottom of the cooking vessel, for heating the bottom of the cooking vessel, a heat exchanging jacket arranged in closed cross section on the wall surface on the outer peripheral side rather than the bottom of the cooking vessel, so that a thermal fluid is supplied into the closed cross section thereof, thereby enabling heat exchange with the wall, fluid supply and drain means for supplying and draining the thermal fluid to and from the heat exchanging jacket, wall temperature detection means for detecting the wall temperature of the cooking vessel, wall temperature memory means for storing, as a reference value, beforehand, the wall temperature of the cooking vessel determined based on a temperature at which burning of food materials charged into the cooking vessel occurs, and drive control means for controlling the drive of the heating means, based on a temperature change detected by the wall temperature detection means and the reference value.

The bottom heating means is any one of a gas heater, an electromagnetic induction heater, or an electric heater.

The fluid supply and drain means supplies and drains steam as the thermal fluid.

The weight detection means are load cells provided for legs of a base for supporting at least the cooking vessel and heat exchanging jacket.

The drive control means stops heating by means of the drive control, when the detected change in the gross weight corresponds to a target water content.

The weight change for achieving the cooking object without causing burning of food materials charged into the cooking vessel is determined based on a weight corresponding to a temperature at which the change in the wall temperature of the cooking vessel and the temperature change of the food materials are diverged from each other.

The temperature at which burning of food materials charged into the cooking vessel occurs is a temperature at which the change in the wall temperature of the cooking vessel and the temperature change of the food materials are diverged from each other.

The cooking apparatus comprises food material temperature detection means for detecting a temperature change of food materials charged into the cooking vessel, and the drive control means takes into account the detected temperature change of the food materials.

### BRIEF DESCRIPTION OF THE DRAWINGS

Figure 1 generally shows a cooking apparatus according to a first embodiment of the present invention;
Fig. 2 is a partly broken front view showing the cooking apparatus of the first embodiment;
Fig. 3 is an enlarged view showing a part A of Fig. 2;
Fig. 4 generally shows a cooking apparatus according to a second embodiment of the present invention;
Figure 5 shows a weight change in a case of onion according to a third embodiment of the present invention, (a) being a graph after the control and (b) being a graph before the control.
Figure 6 shows a weight change in a case of bean jam according to a third embodiment of the present invention, (a) being a graph after the control and (b) being a graph before the control.
Figure 7 shows a temperature change in a case of onion according to a fourth embodiment of the present invention, (a) being a graph after the control and (b) being a graph before the control.
Figure 8 shows a temperature change in a case of bean jam according to a fourth embodiment of the present invention, (a) being a graph after the control and (b) being a graph before the control.

### DESCRIPTION OF THE PREFERRED EMBODIMENTS

Various embodiments of the present invention will be explained with reference to the accompanying drawings.

### (First embodiment)

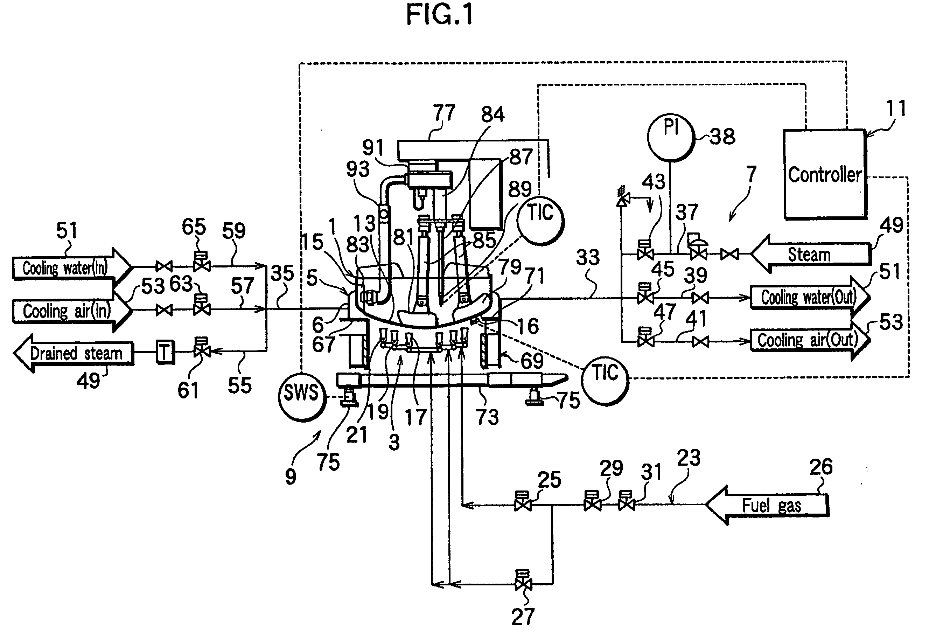

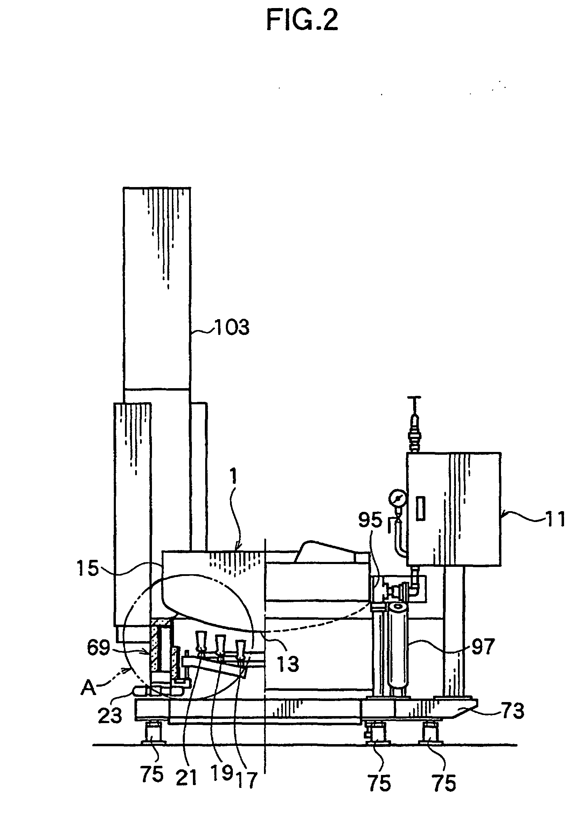

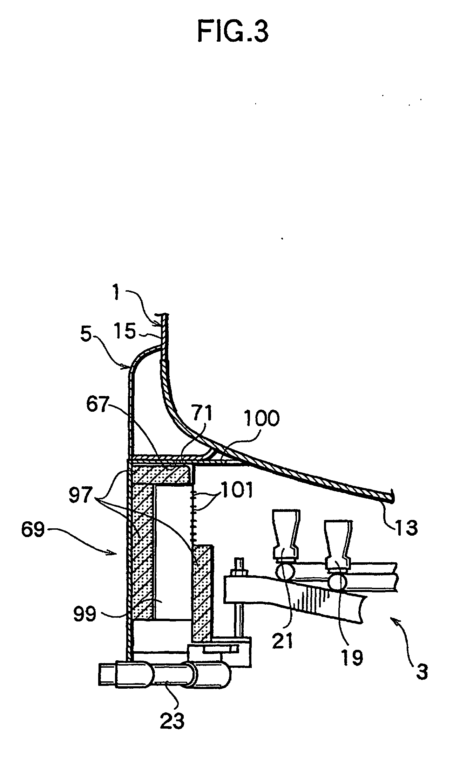

Figure 1 generally shows a cooking apparatus according to the first embodiment of the present invention, Fig. 2 is a partly broken front view showing the same, and Fig. 3 is an enlarged view showing a part A of Fig. 2. The cooking apparatus of the first embodiment has a cooking vessel 1, a bottom heater 3, a heat exchanging jacket 5, a fluid source 7, a weighing unit 9, and a controller 11.

The cooking vessel 1 receives and cooks food materials. The food materials may be vegetables to be fried, or those to be boiled down to make bean paste, sauce, or soup. The cooking vessel 1 has a bottom 13 of a dish-like or spherical shape and a body 15 rising from the periphery of the bottom 13. The shape of the cooking vessel 1 is not particularly limited. The cooking vessel 1 may be made of iron, stainless steel, multiple layers of iron and stainless steel, copper, or a combination of them. Moreover, a temperature sensor 16 is attached to the bottom 13 of the cooking vessel 1 on the periphery side thereof, as the wall temperature detection means. This temperature sensor 16 is for detecting the wall temperature of the bottom 13, and the output of the temperature sensor 16 is input to the controller 11. The wall temperature detection means may also be provided on the body 15 in addition to the bottom 13, to detect the wall temperature by those wall temperature detection means.

The bottom heater 3 is arranged under the bottom 13 to heat the same. In this embodiment, the bottom heater 3 is a gas heater having gas burners 17, 19, and 21, which are arranged in rings, respectively, in a plan view. The gas burners 17 and 19 form inner rings, and the gas burner 21 forms an outer ring, so that the inner and outer rings may separately be controlled.

The gas burners 17, 19, and 21 are connected to a gas pipe 23, which is connected to a gas source for supplying fuel gas 26. The gas pipe 23 has solenoid valves 25, 27, 29, and 31 that are controlled by the controller 11. The solenoid valve 27 controls the gas burners 17 and 19, and the solenoid valve 25 controls the gas burner 21.

The jacket 5 is arranged along the body 15 of the cooking vessel 1 and defines a closed space for passing a thermal fluid that exchanges heat with the body 15. More precisely, the jacket 5 covers a comer between the bottom 13 and the body 15 and is continuous around the body 15. The thermal fluid supplied into the jacket 5 exchanges heat with the body 15, to improve a cooking speed. The jacket 5 may be divided into sections at predetermined intervals around the body 15. In this case, the sections of the jacket 5 may separately be controlled to pass the thermal fluid.

According to the first embodiment, the thermal fluid supplied from the fluid source 7 includes steam, water, and air. If the jacket 5 is required only to heat the cooking vessel 1, the thermal fluid is only steam.

The fluid source 7 has an upper pipe 33 and a lower pipe 35. The upper pipe 33 is connected to an upper part of the jacket 5 on one side thereof. The lower pipe 35 is connected to a lower part of the jacket 5 on the other side thereof. The upper pipe 33 is branched into pipes 37, 39, and 41 having solenoid valves 43, 45, and 47, respectively. The solenoid valves 43, 45, 47 are controlled by the controller 11. The pipe 37 supplies steam 49 and has a pressure sensor 38 whose output is transferred to the controller 11. The pipe 39 drains cooling water 51, and the pipe 41 drains cooling air 53.

The lower pipe 35 is branched into pipes 55, 57, and 59 having solenoid valves 61, 63, and 65, respectively. The solenoid valves 61, 63, and 65 are controlled by the controller 11. The pipe 55 drains the steam 49. The pipe 57 supplies the cooling air 53, and the pipe 59 supplies the cooling water 51.

The bottom of the jacket 5 has a flat face 67 along the length of the jacket 5. The flat face 67 faces a top face 71 of a heat insulating wall 69. The heat insulating wall 69 surrounds the gas heater 3 and is supported by a base 73. The heat insulating wall 69 thermally insulates the jacket 5 from the gas heater 3.

The base 73 has legs 75. Each leg 75 has a load cell whose output is transferred to the controller 11. The load cells form the weighing unit 9. The controller 11 averages the outputs of the load cells, to correctly calculate the gross weight of the cooking vessel 1 and jacket 5. Even if food materials in the cooking vessel 1 are shifted to one side due to stirring, the controller 11 properly receives data from the load cells and averages the data to correctly grasp the gross weight of the cooking vessel 1 and jacket 5. According to the first embodiment, the detected gross weight may include the weights of the cooking vessel 1, jacket 5, and heat insulating wall 69.

The controller 11 stores a reference weight change corresponding to a water-content change to attain a target state of food materials cooked in the cooking vessel 1. Namely, the controller 11 properly controls a water content in the cooking vessel 1, or the ratio of the weight of water within and around food materials in the cooking vessel 1 to the weight of all materials in the cooking vessel 1, during the cooking of the food materials so that the food materials are finished with a required taste such as sweetness. The controller 11 also monitors a water content in the cooking vessel 1 so that food materials therein are not burned. If required, the controller 11 properly burns food materials in the cooking vessel 1 to add a flavor or color to the food materials.

To correctly achieve various cooking objects, the first embodiment carries out cooking tests in advance to determine the relationships between changes in the weight of food materials cooked in the cooking vessel 1 and water-content changes in the cooking vessel 1 to attain required cooked states of the food materials. The tests are carried out with the use of the load cells attached to the legs 75. Weight changes measured in the tests are stored as reference values in the controller 11, which uses the reference values to attain each cooking object. There are many cooking objects such as frying vegetables, boiling down bean paste, sauce, and soup, stewing food materials, etc., which involve different quantities of food materials, water, seasonings, etc. Accordingly, the first embodiment finds the relationships between changes in the weight of food materials cooked in the cooking vessel 1 and water-content changes in the cooking vessel 1 to attain objective cooked states of the food materials, as well as the relationship between a water content that realizes a required cooked state of food materials and the weight of the food materials in the required cooked state.

According to a change in the gross weight detected by the weighing unit 9, the controller 11 calculates a change in the weight of food materials in the cooking vessel 1 and controls the gas heater 3 and fluid source 7 so as to adjust the weight change to a reference value. The controller 11 controls the gas heater 3 and fluid source 7 through the solenoid valves 25, 27, 43, 45, 47, 61, 63, 65, etc. If a change in the weight of the food materials corresponds to a target water content, the controller 11 stops the gas heater 3 and fluid source 7.

The cooking vessel 1 is provided with a stirring unit 77 having blades 79, 81, and 83, to stir food materials cooked in the cooking vessel 1. According to the first embodiment, the stirring unit 77 is separated from the cooking vessel 1. Instead, the stirring unit 77 and cooking vessel 1 may be supported together on the base 73. In this case, the gross weight detected by the weighing unit 9 includes the weight of the stirring unit 77.

The blades 79 and 81 are attached to branch shafts 85 supported by an eccentric rotary shaft 84. A lower part of the shaft 84 has an auxiliary shaft 87 whose lower end supports a temperature sensor 89 for detecting the temperature of food materials in the cooking vessel 1. The output of the temperature sensor 89 is transferred to the controller 11. The blade 83 is attached to a branch shaft 93 supported by a main shaft 91. The blades 79, 81, and 83 improve a cooking speed to correctly attain a required cooked state of food materials.

Figure 2 is a front view showing a support structure for the cooking vessel 1. The cooking vessel 1 is rotatably supported with a rotary shaft 95 on one side of the diameter thereof, for example, on this side of Fig. 2. The cooking vessel 1 is connected to a piston-cylinder unit 97 through brackets, etc. By driving the piston-cylinder unit 97, the other side, for example, that side of Fig. 2 of the cooking vessel 1 is raised around the shaft 95 to discharge cooked food materials from the cooking vessel 1.

Figure 3 is an enlarged sectional view showing a part A of Fig. 2. In Figs. 2 and 3, the heat insulating wall 69 has heat insulators 97 to define a hollow 99. The hollow 99 surrounds the gas heater 3. The top of the heat insulating wall 69 is provided with a shield plate 100. The heat insulating wall 69 and shield plate 100 thermally separate the jacket 5 from the gas heater 3, to prevent heat generated by the gas heater 3 from directly affecting the jacket 5. The inside of the heat insulating wall 69 is provided with many through holes 101 to communicate with the gas heater 3. A part of the heat insulating wall 69 is connected to an exhaust duct 103 that communicates with the hollow 99. The through holes 101, hollow 99, and exhaust duct 103 discharge burned gas from the gas heater 3.

The operation of the cooking apparatus of the first embodiment will be explained. Food materials such as vegetables, water (if required), seasonings, etc., in predetermined quantities are charged into the cooking vessel 1. The timing of putting the water and seasonings into the cooking vessel 1 may be after the start of heating the cooking vessel 1 depending on a cooking object. The quantities of food materials, water, seasonings, etc., are predetermined for different cooking objects through tests so as to attain proper water contents for the cooking objects. Results of the tests are used to determine the quantities of food materials, water, seasonings, etc., for a given cooking object. This greatly improves workability.

The controller 11 controls the solenoid valves 25 and 27 of the gas heater 3. The fuel gas 26 is passed through the pipe 23, is jetted from the gas burners 17, 19, and 21, and is automatically ignited. The gas heater 3 heats the bottom 13 of the cooking vessel 1 to a high temperature. At the same time, the controller 11 controls the solenoid valves 43 and 61, so that the steam 49 is passed through the pipe 37 into the jacket 5. The steam 49 may be saturated steam or superheated steam depending on requirements. The steam 49 in the jacket 5 exchanges heat with the body 15 of the cooking vessel 1, thereby heating the body 15.

The food materials such as vegetables filled to the top of the cooking vessel 1 are cooked at high speed with the heat from the gas heater 3 and jacket 5. The heat to the bottom 13 is conducted to the body 15 where the steam is present in the jacket 5. Accordingly, the heat from the bottom 13 does not escape to the outside but is efficiently conducted to the inside of the cooking vessel 1.

If the food materials in the cooking vessel 1 are vegetables to be fried, they quickly shrink from the top of the cooking vessel 1 toward the bottom 13 and are cooked at high temperature due to the heat from the gas heater 3.

If the vegetables are cooked at high temperature only with the gas heater under the bottom 13 like the prior art and if the gas heater is driven powerfully to shorten a cooking time, the vegetables will burn. To avoid this, the prior art must decrease the power of the gas heater, to elongate a cooking time.

On the other hand, the first embodiment heats the bottom 13 with the gas heater 3 and the body 15 with the steam 49 in the jacket 5. As a result, the vegetables quickly shrink toward the bottom 13 and are cooked at high temperature by the gas heater 3. Namely, the hybrid heating of the first embodiment is capable of cooking food materials in a short time.

During cooking, the stirring unit 77 turns the main shaft 91 that drives the eccentric shaft 84 around the main shaft 91. At the same time, the branch shafts 85 revolve around the eccentric shaft 84. As a result, the blades 79 and 81 turn around the eccentric shaft 84 while revolving around the main shaft 91. Simultaneously, the blade 83 turns around the main shaft 91. These blades 79, 81, and 83 stir and cook the food materials in the cooking vessel 1 at high temperature and high speed.

If the food materials are vegetables to be fried, the vegetables will quickly shrink toward the bottom 13. At this time, the controller 11 controls the solenoid valves 43 and 61 to drain the steam from the jacket 5 or stop the steam to the jacket 5, thereby weakening or stopping heat exchange by the steam. Namely, the heat exchange on the body 15 is weakened or stopped. As a result, the vegetables that are shrinking toward the bottom 13 will never be overcooked or burned by the steam around the body 15.

The controller 11 may control the solenoid valves 45, 47, 63, and 65 to introduce cooling water or air into the jacket 5 to forcibly cool the body 15. This surely prevents the burning of the vegetables on the body 15. The controller 11 supplies steam first to heat the body 15 and then supplies water or air to cool the body 15 so that the vegetables in the cooking vessel 1 may not burn on the body 15 when shrinking toward the bottom 13. The cooling of the body 15 does not affect the high-temperature cooking of the vegetables with the gas heater 3 because the vegetables are mostly shrunk and are present around the bottom 13. For some food materials, the gas heater 3 is stopped after cooking the food materials, and the cooling water 51 or cooling air 53 is actively introduced into the jacket 5 to cool the food materials in the cooking vessel 1.

A water content in the cooking vessel 1, or the ratio of the weight of water within and-around food materials in the cooking vessel 1 to the weight of all materials in the cooking vessel 1, is an important factor to determine the sweetness, saltiness, taste, or burning of the food materials cooked in the cooking vessel. Accordingly, the first embodiment provides the weighing unit 9 consisting of, for example, load cells for the legs 75 to detect a gross weight. According to the gross weight, the controller 11 calculates a change in the weight of food materials in the cooking vessel 1, compares the calculated change with a reference value, and controls the gas heater 3 and fluid source 7 to make the calculated change agree with the reference value. It is possible to prepare a gross-weight reference value based on the weights of the cooking vessel and food materials and directly compare the reference value with a gross weight detected during cooking.

To control a water content in the cooking vessel 1, the first embodiment may control the solenoid valves 25 and 27 to selectively control the outer gas burner 21 and the inner gas burners 17 and 19. At the same time, the first embodiment may control the blades 79, 81, and 83 to control the water content. The relationships between water contents and the stirring conditions of the blades 79, 81, and 83 are measured in advance through tests and are stored in the controller 11.

The first embodiment also controls the solenoid valves 43, 45, 47, 61, 63, and 65 to selectively supply and drain steam, cooling water, and cooling air to and from the jacket 5, thereby controlling the temperature of food materials in the cooking vessel 1.

Through these control measures, the first embodiment correctly controls water in the cooking vessel 1 and attains a required cooked state of food materials cooked in the cooking vessel 1. Accordingly, food materials cooked according to the first embodiment surely have a target water content.

When boiling down food materials to prepare bean paste, sauce, or soup, the first embodiment stops the gas heater 3 and fluid source 7 if the weight of the food materials in the cooking vessel 1 agrees with a value that corresponds to a required water content. As a result, the cooked food materials have a target water content.

To correctly attain a target water content, it is necessary to consider water to evaporate due to heat remaining in the cooking vessel 1 after the stoppage of heating the cooking vessel 1. Such evaporation due to remnant heat can be eliminated by introducing cooling water or cooling air into the jacket 5 as soon as the heating of the cooking vessel 1 is stopped.

Some food materials need positive burning to add a color or flavor thereto. In this case, the cooking of the food materials must strictly be controlled because excessive burning spoils the color and flavor thereof. The first embodiment carries out cooking tests in advance to determine the relationships between the weights of food materials and the water contents thereof and stores the relationships as reference values in the controller 11. The reference values are used to correctly burn food materials cooked in the cooking vessel 1.

The hybrid heating of the first embodiment is capable of cooking food materials at temperatures and speeds that are substantially double those of the prior art. Unlike the prior art that relies on the skill of workers, the first embodiment is capable of correctly cooking food materials without skill or overheating, to realize a target cooked state of the food materials. Namely, the first embodiment is capable of cooking food materials at high temperature within a short time without skill.

When detecting and controlling a weight change related to food materials cooked in the cooking vessel 1, the first embodiment may display a water content on, for example, a liquid-crystal display so that workers may visually confirm a deviation from a reference value. This enables the workers to confirm in real time whether or not the cooking apparatus is operating properly and is cooking food materials correctly. The cooking apparatus may have an alarm such as a buzzer to inform workers who are at remote positions of an abnormality occurring in the cooking apparatus, so that the workers may stop and repair the cooking apparatus.

For some food materials, it is necessary to select outward or inward convection in the cooking vessel 1. In this case, the first embodiment controls, through the controller 11, the solenoid valves 25 and 27 to stop or activate the inner gas burners 17 and 19 and the outer gas burner 21, to cause required convection.

Although the first embodiment explained above cooks vegetables that shrink toward the bottom 13 of the cooking vessel 1, the cooking apparatus of the first embodiment is capable of cooking any other food materials such as cream that inflates during cooking. When cooking cream, the first embodiment controls the gas heater 3 and fluid source 7 as mentioned above to control the water content of the cream to attain a required cooked state.

While the gas heater 3 is operating, the first embodiment surely discharges exhaust from the gas heater 3 through the holes 101, hollow 99, and exhaust duct 103. The heat insulating wall 69 thermally separates the jacket 5 from the gas heater 3, to prevent heat radiation from the gas heater 3 from affecting the jacket 5.

### (Second embodiment)

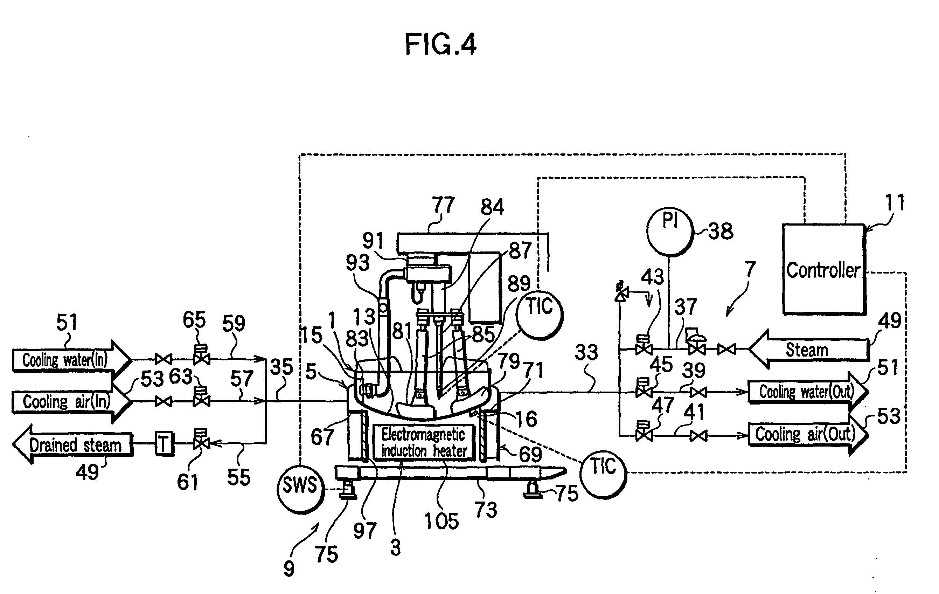

Figure 4 generally shows a cooking apparatus according to the second embodiment of the present invention. The same parts as those of the first embodiment are represented with like reference numerals.

The second embodiment employs an electromagnetic induction heater 105 as a bottom heater, which is arranged under a bottom 13 of a cooking vessel 1. The heater 105 is electrically controlled by a controller 11. Like the gas heater of the first embodiment, the heater 105 has an annular outer part and an annular inner part that are separately controlled by the controller 11.

The second embodiment provides substantially the same effect as the first embodiment. Due to the electromagnetic induction heater 105, the controller 11 of the second embodiment is simpler than that of the first embodiment. In addition, the second embodiment needs no gas piping or exhaust mechanism required for the gas heater. As a result, the cooking apparatus of the second embodiment is compact.

Instead of employing gas or electromagnetic induction, the heater of the present invention may employ electricity, i.e., an electric heater with heating coils. Alternatively, the bottom 13 of the cooking vessel 1 may have a heat exchanging jacket for passing steam to heat there. In this case, steam for a heat exchanging jacket 5 for heating a body 15 of the cooking vessel 1 may be reheated and supplied as superheated steam to the jacket for the bottom 13. The jacket for the bottom 13 may have a separate system for supplying superheated steam. The jacket 5 for the body 15 may be replaced with a heating coil or an electromagnetic induction heater. Instead of solenoid valves, the first and second embodiments may employ air valves, motor valves, or any other valves.

Any one of the first and second embodiments may omit the weighing unit 9, etc.

### (Third embodiment)

In this embodiment, as the basic structure of the cooking apparatus, the one shown in Figure 1 to Figure 4 can be applied.

On the other hand, in this embodiment, the controller 11 stores beforehand as a reference value a weight change for achieving the cooking object, without causing burning of food materials charged into a cooking vessel 1, as the weight change memory means. The weight change for achieving the cooking object without causing burning of the food materials charged into the cooking vessel 1 is determined based on a weight corresponding to a temperature at which a change in the wall temperature of the cooking vessel 1 and a temperature change of the food materials are diverged from each other, and it has been confirmed by the present applicant. Such temperature will be described later.

The controller 11 controls the drive of at least the gas heater 3, based on the weight change detected by the weight detection means 9 serving as the drive control means, and the reference value. The control of this gas heater 3 is performed by, for example, opening and closing solenoid valves 25, 27. That is to say, such control as reducing step by step or stopping supply of fuel gas 26 to the inner gas burners 17, 19, reducing step by step or stopping supply of the fuel gas 26 to the outer gas burner 21, or shifting the control timing of these inner and outer gas burners 17, 19 and 21 is performed. The controller 11 also controls the drive of the fluid source 7. The objects to be drive-controlled in this case are solenoid valves 43, 45, 47, 61, 63 and 65.

The operation will be explained now. Food materials such as vegetables, and water, seasonings, etc., according to need, are charged into to the cooking vessel 1. The timing of putting the water and seasonings into the cooking vessel 1 may be after the start of heating the cooking vessel 1 depending on a cooking object. The quantities of food materials, water, seasonings, etc., are predetermined for different cooking objects through tests, thereby the quantity of food materials and quantities of water, seasonings, etc., for a given cooking object can be easily determined. This greatly improves workability.

Also in this embodiment, high-speed and high-temperature cooking is performed as in the above embodiments, by means of the drive control by the controller 11. In such a cooking process, it is quite important to control suppression of burning of food materials, while maintaining the cooking speed.

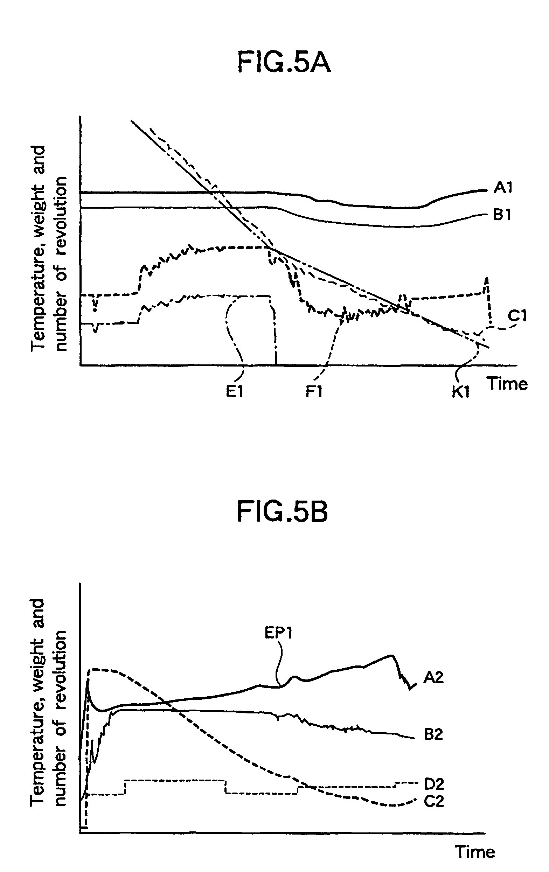

Figure 5(b) shows the wall temperature change A2, temperature change B2 of the food material, weight change C2 of the food material, and stirring state D2 of the food material, when occurrence of burning is confirmed through tests, using "onion" as the food material. The Y-axis in Figure 2 represents temperature, weight and number of revolutions, and the X-axis represents time. In this figure, it can be confirmed that occurrence of burning starts from a point EP1 where the wall temperature change A2 and the temperature change B2 of the food material are diverged from each other, and burning progresses while the diverged state continues. Therefore, the weight change for achieving the cooking object without causing burning of food materials charged into the cooking vessel 1 is determined based on the weight corresponding to the temperature at which the wall temperature change A2 of the cooking vessel 1 and the temperature change of the food material B2 are diverged from each other, and stored beforehand in the controller 11 as a reference value.

That is to say, the weight change C1 as shown in Figure 5(a) is determined beforehand through tests, depending on the cooking objects within a range where the wall temperature of the cooking vessel1 detected by the temperature sensor 16 and the temperature of the food materials detected by the temperature sensor 89 do not cause divergence. In Figure 5(a), the wall temperature changeA1 and temperature changeB1 of the food materials do not cause divergence. A reference lineK1 is determined in accordance with the weight changeC1. Since the state of divergence differs depending on the quantity of onions as the food materials, and the quantities of water, seasoning, etc., these quantities are determined beforehand for realizing a target cooked state, and tests are repeated based on these quantities, to thereby determine the reference line K1. There is also a possibility that this reference line K1 may change due to the humidity and temperature of that day. Therefore, by storing these data also in the controller 11, more accurate reference line K1 can be set. Stirring of food materials is for suppressing burning, however, the circumstances do not affect much to the divergence so long as stirring is performed.

During cooking, the gross weight is detected by each load cell in the weighing unit 9 attached to each leg 75, and a weight change of the food material in the cooking vessel 1 is calculated sequentially by the controller 11. Such calculation results are compared with the reference line K1, being the reference value, and the gas heater 37 is controlled so that the calculation results coincide with the reference line K1. The construction may be such that the reference value is designated as a change in the gross weight including the cooking vessel 1 during cooking, and the detected gross weight is directly compared with such a reference value for control.

For example, on the gas heater 3 side, the control is performed as shown by E1 and F1 in Figure 5(a). That is to say, the control is performed by selectively stopping the gas burner 21 on the outer side F1 and gas burners 17, 19 on the inner side E1, by controlling opening and closing of the solenoid valves 25, 27.

At the same time, control on the side of the fluid source 7 can be performed. For example, opening and closing of the solenoid valves 43, 45, 47, 61 and 63 are controlled, to thereby supply or drain steam, cooling water and cooling air selectively with respect to the heat exchanging jacket 5, thereby controlling the temperature.

Some food materials need positive burning to add a color or flavor thereto. In this case, the cooking of the food materials must strictly be controlled because excessive burning spoils the color and flavor thereof. In such a case, cooking tests are performed in advance to determine the reference line K1 for obtaining burning in accordance with the cooking object and this reference line K1 is stored as a reference value, thereby desired burning can be obtained precisely.

The hybrid heating described above is capable of cooking food materials at temperatures and speeds that are substantially double those of the prior art. In burning prevention and burning control relying on the skill of workers, there are problems in that the operation may not be in time, or burning tends to occur due to overheating. However, in this embodiment, it is possible to easily and correctly cook food materials, to realize a target cooked state of the food materials. As a result, in this embodiment, the speed of high-temperature cooking is not limited by the work ability of workers, thereby high-temperature and high-speed cooking can be performed reliably.

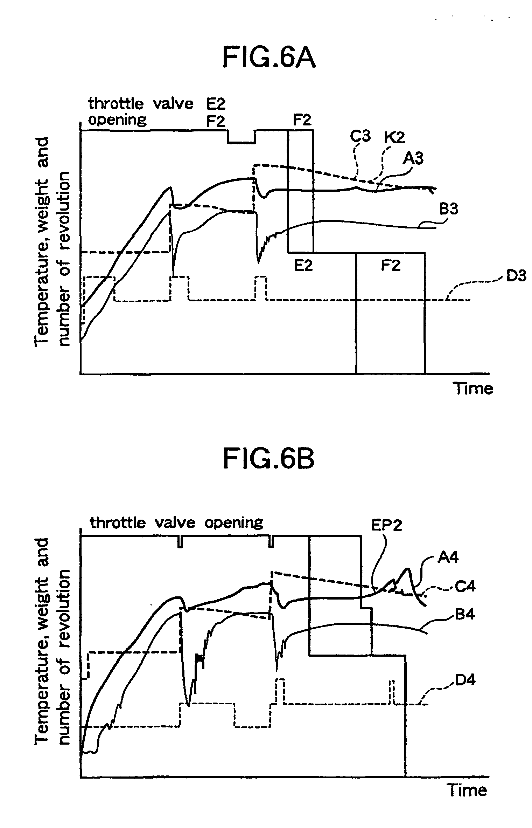

Figure 6(b) shows the wall temperature change A4, the temperature change B4 of the food materials, weight change C4 of the food materials, and stirring state D4 of the food materials, when occurrence of burning is confirmed through tests, using "bean jam" as the food material. The Y-axis in Figure 6 represents temperature, weight and number of revolutions, and the X-axis represents time. In this figure, it can be confirmed that occurrence of burning starts from a point EP2 where the wall temperature change A4 and the temperature change B4 of the food material are diverged from each other, due to the remaining heat after having completed cooking, and burning progresses while the diverged state continues. Therefore, the weight change for achieving the cooking object, without causing burning of food materials charged into the cooking vessel 1 due to the remaining heat, is determined based on the divergence of those temperatures, and is stored beforehand in the controller 11 as a reference value.

- That is to say, in Figure 6(a), tests are repeated in the same manner as described above, to thereby determine the weight changeC3 of the food materials for realizing a target cooked state without causing burning by the remaining heat. The wall temperature changeA3 and the temperature changeB3 of the food materials do not cause divergence. The stirring state is D3. A reference lineK2 is determined in accordance with the wight changeC3. In Figure 6(a), the reference lineK2 is the same line with the weight changeC3 of a survey, but the weight changeC3 has fine fluctuations in a practical manner. The reference lineK2 is determined in accordance with the actual weight changeC3. The reference line K2 may change due to the humidity and temperature of that day, and hence, by storing these data also in the controller 11, more accurate reference line K2 can be set.

During cooking in the same manner as described above, the weight control can be performed using the reference line K2. This control is performed as shown by E2 and F2 in Figure 6(a) on the side of the gas heater 3. That is to say, the control is performed by selectively stopping the gas burner 21 on the outer side F2 and gas burners 17, 19 on the inner side E2, by controlling opening and closing of the solenoid valves 25, 27.

As a result, occurrence of burning due to the remaining heat can be precisely suppressed by the weight control.

During the above described cooking, the construction may be such that the wall temperature and the temperature of the food material detected by the temperature sensors 16, 89 are displayed on a liquid crystal monitor or the like so that these temperatures can be confirmed. In this case, it can be visually confirmed that whether suppression of burning and burning control are properly performed or not by the weight control, thereby enabling more precise control. Moreover, the construction may be such that when it is found by the detection of the wall temperature and the food material temperature that divergence occurs, it is judged that the weight control is abnormal, and this is informed by an alarm such as a buzzer to urge repair or the like. As the food materials, white roux, custard cream, eggs, etc. may be used other rather than the above described materials, but this embodiment is not limited thereto.

### (Fourth embodiment)

In this embodiment, as the basic structure of the cooking apparatus, the one shown in Figure 1 to Figure 4 can be applied.

The controller 11 stores beforehand as a reference value a wall temperature of the cooking vessel determined based on the temperature at which burning of the food materials charged into the cooking vessel 1 occurs, as the wall temperature memory means. The present applicant has confirmed that the temperature at which burning of the food materials charged into the cooking vessel 1 occurs is a temperature at which the wall temperature change of the cooking vessel 1 is diverged from the temperature change of the food materials. Such temperature will be described later.

The controller 11 controls the drive of at least the gas heater 3, based on the temperature change detected by the temperature sensor 16 serving as the drive control means, and the reference value. The control of this gas heater 3 is performed by, for example, opening and closing solenoid valves 25, 27. That is to say, such control as reducing step by step or stopping supply of the fuel gas 26 to the inner gas burners 17, 19, reducing step by step or stopping supply of the fuel gas 26 to the outer gas burner 21, or shifting the control timing of these inner and outer gas burners 17, 19 and 21 is performed. The controller 11 also controls the drive of the fluid source 7. The objects to be drive-controlled in this case are solenoid valves 43, 45, 47, 61, 63 and 65.

The operation will be explained now. Also in this embodiment, food materials such as vegetables, and water, seasonings, etc., according to need, are charged into to the cooking vessel 1, in the same manner as in the third embodiment.

Then, high-speed and high-temperature cooking is performed in the same manner as described above also in this embodiment by the drive control of the controller 11. In such a cooking process, suppression of burning of the food materials is controlled, while maintaining the cooking speed.

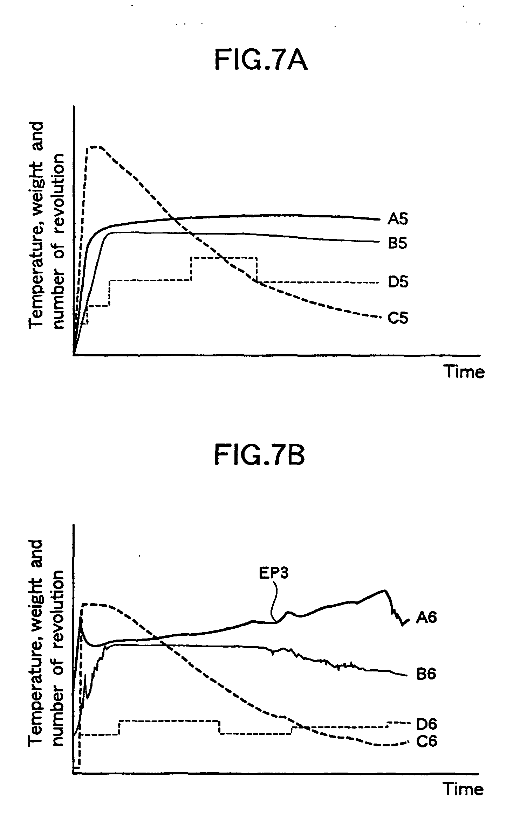

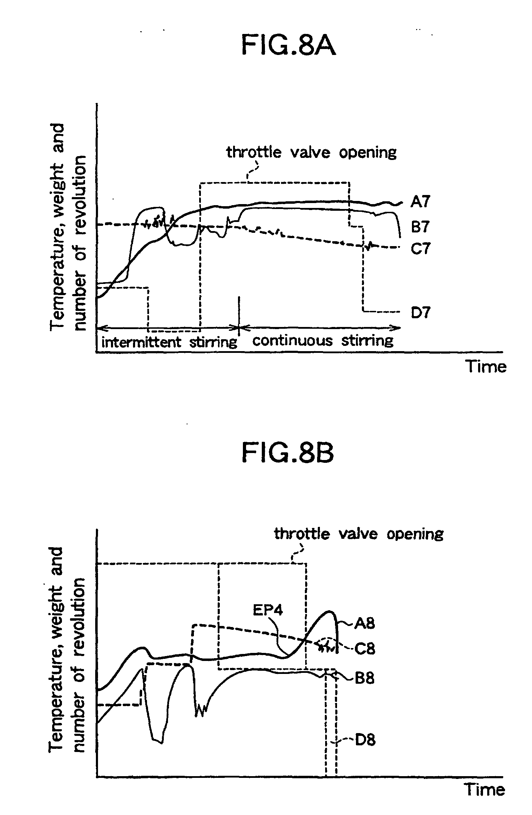

Figure 7(b) shows the wall temperature change A6, temperature change B6 of the food material, weight change C6 of the food material, and stirring state D6 of the food material, when occurrence of burning is confirmed through tests, using "onion" as the food material. Figure 8(b) shows the wall temperature change A8, temperature change B8 of the food material, weight change C8 of the food material, and stirring state D8of the food material, when occurrence of burning is confirmed through tests, using "bean jam" as the food material. In Figure 7 and Figure 8, the Y-axis represents temperature, weight and number of revolutions, and the X-axis represents time. In these figures, it can be confirmed that occurrence of burning starts from a point EP3 and EP4 where the wall temperature change A6, A8 and the temperature change B6, B8of the food materials are diverged from each other, respectively, and burning progresses while the diverged state continues. These points EP3, EP4 are stored in the controller 11 as reference values. The points EP3, EP4 differ depending on the quantity of "onion" or "bean jam" as the food materials, and the quantities of water, seasoning, etc. Therefore, these quantities are determined in advance for realizing a target cooked state, and tests are repeated based on these quantities, to thereby determine these points EP3, EP4. Also, these points EP3, EP4 may change depending on the humidity and temperature of that day. Therefore, by storing these data also in the controller 11, more accurate points EP3, EP4 can be set. Stirring of food materials is for suppressing burning, however, the circumstances do not affect much to these points EP3, EP4, so long as stirring is performed.

These points EP3, EP4 are stored as reference values in the controller 11, and the gas heater 3 is controlled by the controller 11 so that the wall temperatureA5,A7 in figure7(a),8(a) of the cooking vessel 1 detected by the temperature sensor 16 does not exceed these points EP3, EP4. The control contents are as described above. The temperature change of the food materials is B5 and B7, weight change of the food materials is C5 and C7. At the same time, the stirring state by means of the stirring blades 79, 81, 83 is also controlled, and the stirring situation is designated as D1 and D3. Also, on the side of the fluid source 7, the solenoid valves 43, 45, 47, 61 and 63 are controlled so as to open or close, to selectively supply or drain steam, cooling water or cooling air with respect to the heat exchanging jacket 5. As a result, temperature control is performed.

By such control, the temperature of the food materials are controlled as high as possible like B1, thereby enabling high-speed and high-temperature cooking while preventing burning.

Some food materials need positive burning to add a color or flavor thereto. In this case, the cooking of the food materials must strictly be controlled because excessive burning spoils the color and flavor thereof. In such a case, cooking tests are performed in advance to determine the wall temperature for obtaining burning in accordance with the cooking object and this wall temperature is stored as a reference value, thereby desired burning can be obtained precisely.

The hybrid heating described above is capable of cooking food materials at temperatures and speeds that are substantially double those of the prior art. In burning prevention and burning control relying on the skill of workers, there are problems in that the operation may not be in time, or burning tends to occur due to overheating. However, in this embodiment, it is possible to easily and correctly prevent burning and control burning. As a result, in this embodiment, the speed of high-temperature cooking is not limited by the work ability of workers, thereby high-temperature and high-speed cooking can be performed reliably.

As the food materials, white roux, custard cream, eggs, etc. may be used other rather than the above described materials, but this embodiment is not limited thereto.

As described above, in the present invention, food materials are charged into the cooking vessel, and the bottom of the cooing vessel is heated by the bottom heating means, and the thermal fluid is supplied and drained to the heat exchanging jacket from outside by the fluid supply and drain means, thereby enabling heat exchange with respect to the wall surface on the outer peripheral side rather than the bottom. As a result, the food materials can be efficiently heated by both the bottom of the cooking vessel and the wall surface on the outer peripheral side rather than the bottom. Moreover, heating by means of the bottom heating means is conducted to the wall surface on the outer peripheral side rather than the bottom of the cooking vessel, due to the heat conduction. At this time, since there is the heat exchanging jacket on the wall surface on the outer peripheral side rather than the bottom of the cooking vessel, and it is possible to heat by means of the heat exchange with the thermal fluid, the heat conducted from the bottom side due to heat conduction is prevented from being radiated to the outside. As a result, efficient heat conduction into the cooking vessel becomes possible. Therefore, as a whole, in the case where a large quantity of food materials is charged and cooked, the cooking time can be greatly shortened.

Moreover, the gross weight on the side of at least the cooking vessel and the heat exchanging jacket can be detected by the weight detection means, and a weight change corresponding to a water-content change at the time of heating for achieving the cooking object of the food materials charged into the cooking vessel can be stored beforehand as a reference value by the weight change memory means. Hence, the drive of at least the bottom heating means can be controlled by the drive control means, based on a change in the gross weight detected by the detection means and the reference value. As a result, at the time of heating, the water-content change can be accurately controlled, thereby the cooking object of the food materials can be accurately achieved. Particularly in the case where the cooking time is largely shortened, as described above, considerable skill is required for workers to confirm the water-content change, while paying attention in detail. However, by the above drive control, accurate control of the water-content change can be performed quite easily. As a result, the cooking speed is not limited due to the water content control, and as a whole, the cooking time can be greatly shortened.

Furthermore, the gross weight on the cooking vessel side can be detected by the weight detection means, and a weight change for achieving the cooking object without causing burning of food materials charged into the cooking vessel can be stored by the weight change memory means, in advance as a reference value. Hence, the drive of the heating means can be controlled by the drive control means, based on the change in the gross weight detected by the detection means and the reference value. As a result, burning can be suppressed, and the cooking time can be shortened, without restricting the cooking speed.

The wall temperature of the cooking vessel can be also detected by the wall temperature detection means. The wall temperature of the cooking vessel determined based on the temperature at which burning of the food materials charged into the cooking vessel occurs can be stored beforehand as a reference value by the wall temperature memory means. Then, based on the detected temperature change and the reference value, the drive of the heating means can be controlled by the drive control means. As a result, the heating means can be controlled so as not to cause burning of the food materials, and the cooking time can be shortened, without restricting the cooking speed.

The bottom heating means may be any one of a gas heater, an electromagnetic induction heater, or an electric heater. Accordingly, the bottom of the cooking vessel can be reliably heated at high temperatures.

The fluid supply and drain means can supply and drain steam as the thermal fluid. Therefore, heat exchange can be performed by the heat of the steam, thereby enabling reliable speedup of cooking by efficient heat exchange.

The weight detection means can be constructed by load cells provided for legs of a base for supporting at least the cooking vessel and heat exchanging jacket. As a result, the gross weight on the side of at least the cooking vessel and the heat exchanging jacket can be accurately detected.

The drive control means can stop the drive control, when the detected change in the gross weight corresponds to a target water content. As a result, water contents for the cooking objects can be accurately obtained, and the cooking objects of the food materials can be accurately achieved.

The weight change for achieving the cooking object without causing burning of food materials charged into the cooking vessel is determined based on a weight corresponding to a temperature at which the change in the wall temperature of the cooking vessel and the temperature change of the food materials are diverged from each other. As a result, cooking can be accurately performed, while suppressing burning.

The temperature at which burning of food materials charged into the cooking vessel occurs is designated as a temperature at which the change in the wall temperature of the cooking vessel and the temperature change of the food materials are diverged from each other. As a result, cooking can be accurately performed, while suppressing burning.

A temperature change of food materials charged into the cooking vessel is detected by the food material temperature detection means, and the drive control means can take into account the detected temperature change of the food materials. As a result, the temperature of the food materials can be properly maintained at a high temperature, while maintaining the wall temperature at which burning does not occur, thereby enabling accurate high-speed and high-temperature cooking, while suppressing burning.

### EXPLOITATION IN INDUSTRY

A cooking apparatus of the present invention is fit to use high-speed and high-temperature cooking, with respect to cooking a food materials such as fried vegetables. The cooking apparatus is fit to use high-speed and high-temperature cooking while preventing burning or temperate controlling burning, with respect to cooking fried vegetables, boiling down food materials to cook bean paste, sauce, or soup in the cooking vessel.

## Claims

1. A cooking apparatus comprising:
a cooking vessel (1) for receiving and cooking food materials;
bottom heating means (3) arranged under the bottom of the cooking vessel (1);
a heat exchanging jacket (5) arranged in closed cross section on the wall surface on the outer peripheral side rather than the bottom of the cooking vessel (1), so that a thermal fluid is supplied into the closed cross section thereof, thereby enabling heat exchange with the wall surface; and
fluid supply and drain means (7) for supplying from outside and draining the thermal fluid to and from the heat exchanging jacket (5);
with the bottom heating means (3) and the fluid supply and, drain means (7) being separately controlled;
**characterized in that**
the bottom heating means (3) is any one of a gas heater (17, 19, 21), an electromagnetic induction heater (105), and an electric heater, for heating the bottom of the cooking vessel (1) at high temperatures.

2. Cooking apparatus according to claim 1, comprising:
weight detection means (9) for supporting integrally at least the cooking vessel (1) and heat exchanging jacket (5) and detecting the gross weight on the side of the cooking vessel (1) and the heat exchanging jacket (5);
weight change memory means for storing, as a reference value beforehand, a weight change corresponding to a water-content change at the time of heating, in order to achieve the cooking object of food materials charged into the cooking vessel (1); and
drive control means (11) for controlling the drive of at least the bottom heating means (3), based on the change in the gross weight detected by the weight detection means (9) and the reference value.

3. Cooking apparatus according to claim 1, comprising:
weight detection means (9) for supporting integrally at least the cooking vessel (1), and heat exchanging jacket (5) and detecting the gross weight on the side of the cooking vessel (1) and the heat exchanging jacket (5);
weight change memory means (11) for storing a weight change as a reference value beforehand, in order to achieve the cooking object without causing burning of food materials charged into the cooking vessel (1); and
drive control means (11) for controlling the drive of the heating means (3), based on the change in the gross weight detected by the weight detection means (9) and the reference value.

4. Cooking apparatus according to claim 1, comprising:
wall temperature detection means (16) for detecting the wall temperature of the cooking vessel (1);
wall temperature memory means for storing, as a reference value, beforehand the wall temperature of the cooking vessel (1) determined based on a temperature at which burning of food materials charged into the cooking vessel (1) occurs; and
drive control means for controlling the drive of the heating means (3), based on the temperature change detected by the wall temperature detection means (16) and the reference value.

5. Cooking apparatus of any one of claims 1 to 4, **characterized in that**
the fluid supply and drain means (7) supplies and drains steam as the thermal fluid.

6. Cooking apparatus of any one of claim 2 or 3, **characterized in that**
the weight detection means (9) are load cells provided for legs (75) of a base (73) for supporting at least the cooking vessel (1) and heat exchanging jacket (5).

7. Cooking apparatus of claim 2, **characterized in that**
the drive control means (11) stops heating by means of the drive control, when the detected change in the gross weight corresponds to a target water content.

8. Cooking apparatus of claim 3, **characterized in that**
the weight change for achieving the cooking object without causing burning of food materials charged into the cooking vessel (1) is determined based on a weight corresponding to a temperature at which the change in the wall temperature of the cooking vessel (1) and the temperature change of the food materials are diverged from each other.

9. Cooking apparatus of claim 4, **characterized in that**
the temperature at which burning of food materials charged into the cooking vessel (1) occurs is a temperature at which the change in the wall temperature of the cooking vessel (1) and the temperature change of the food materials are diverged from each other.

10. Cooking apparatus of any one of claim 4 or 9, comprising food material temperature detection means (89) for detecting a temperature change of food materials charged into the cooking vessel (1), **characterized in that**
the drive control means takes into account the detected temperature change of food materials.

## Patentansprüche

1. Kochgerät umfassend:
ein Kochgefäß (1) zur Aufnahme und zum Kochen von Essensmaterialien;
ein unter einem Boden des Kochgefäßes (1) angeordnetes Bodenheizmittel (3);
einen Wärmetauschermantel (5), der mit einem geschlossenem Querschnitt mehr auf einer Wandfläche der Außenseite als an dem Boden des Kochgefäßes (1) angeordnet ist, so dass ein Wärmetauscherfluid in den geschlossenen Querschnitt zugeführt wird, wobei ein Wärmeaustausch mit der Wandfläche ermöglicht wird; und
ein Fluidzuführ- und Fluidableitmittel (7) zum Zuführen von außen und zum Ableiten des Wärmetauscherfluid zu und von dem Wärmetauschermantel (5);
wobei das Bodenheizmittel (3) und das Fluidzuführ- und Fluidableitmittel (7) getrennt gesteuert werden;
**dadurch gekennzeichnet, dass**
das Bodenheizmittel (3) eine Gasheizung (17,19,21), eine elektromagnetische Induktionsheizung (105) oder eine elektrische Heizung zum Heizen des Bodens des Kochgefäßes (1) bei hohen Temperaturen ist.

2. Kochgerät gemäß Anspruch 1, umfassend:
ein Gewichtserfassungsmittel (9), das mindestens das Kochgefäß (1) zusammen mit dem Wärmetauschermantel (5) trägt und welches das Bruttogewicht auf der Seite des Kochgefäßes (1) und des Wärmetauschermantels (5) ermittelt;
ein Gewichtsänderungsspeichermittel zum Speichern, als ein Referenzwert im voraus, einer Gewichtsänderung, entsprechend einer Wassergehaltsänderung zur Zeit des Heizens, um ein Kochobjekt der in das Kochgerät eingefüllten Essensmaterialien zu erhalten; und
ein Antriebssteuermittel (11) zum Steuern eines Antriebs mindestens der Bodenheizmittel (3) basierend auf der Änderung des Bruttogewichts, das durch das Gewichtserfassungsmittel (9) bestimmt wird, und dem Referenzwert.

3. Kochgerät gemäß Anspruch 1, umfassend:
ein Gewichtserfassungsmittel (9), das mindestens das Kochgefäß (1) zusammen mit dem Wärmetauschermantel (5) trägt und welches das Bruttogewicht auf der Seite des Kochgefäßes (1) und des Wärmetauschermantels (5) ermittelt;
ein Gewichtsänderungsspeichermittel zum Speichern einer Gewichtsänderung als ein Referenzwert im voraus, um ein Kochobjekt zu erhalten, ohne ein Anbrennen der in das Kochgerät eingefüllten Essensmaterialien zu verursachen; und
ein Antriebssteuermittel (11) zum Steuern eines Antriebs mindestens der Bodenheizmittel (3) basierend auf der Änderung des Bruttogewichts, das durch das Gewichtserfassungsmittel (9) bestimmt wird, und dem Referenzwert.

4. Kochgerät gemäß Anspruch 1, umfassend:
ein Wandtemperaturerfassungsmittel (16) zum Ermitteln der Wandtemperatur des Kochgefäßes (1);
ein Wandtemperaturspeichermittel zum Speichern, als ein Referenzwert im voraus, der Wandtemperatur des Kochgefäßes (1), die basierend auf einer Temperatur ermittelt wird, bei der ein Verbrennen der in das Kochgefäß (1) eingefüllten Essensmaterialien auftritt; und
ein Antriebssteuermittel (11) zum Steuern eines Antriebs des Heizmittels (3) basierend auf der von dem Wandtemperaturerfassungsmittel (16) bestimmten Änderung der Wandtemperatur und dem Referenzwert.

5. Kochgerät nach einem der Ansprüche 1 bis 4, **dadurch gekennzeichnet, dass** die Fluidzuführ- und -ableitmittel (7) Dampf als Wärmetauscherfluid zuführen und ableiten.

6. Kochgerät nach einem der Ansprüche 2 oder 3, **dadurch gekennzeichnet, dass** die Gewichtserfassungsmittel (9) Kraftmessdosen sind, die für Beine (75) einer Basis (73) zum Tragen mindestens des Kochgefäßes (1) und des Wärmetauschermantels (5) vorgesehen sind.

7. Kochgerät gemäß Anspruch 2, **dadurch gekennzeichnet, dass** das Antriebssteuermittel (11) das Heizen mit Mitteln der Antriebssteuerung stoppt, falls die ermittelte Veränderung des Bruttogewichts einem Zielwassergehalt entspricht.

8. Kochgerät gemäß Anspruch 3, **dadurch gekennzeichnet, dass** die Gewichtsänderung zum Erreichen des Kochobjekts ohne ein Anbrennen der in das Kochgefäß (1) eingefüllten Essensmaterialien zu verursachen, basierend auf einem Gewicht bestimmt wird, das einer Temperatur entspricht, bei der die Veränderung der Wandtemperatur des Kochgefäßes (1) und die Temperaturveränderung der Essensmaterialien voneinander divergieren.

9. Kochgerät gemäß Anspruch 4, **dadurch gekennzeichnet, dass** die Temperatur, bei der ein Anbrennen der in das Kochgefäß (1) eingefüllten Essensmaterialien auftritt, eine Temperatur ist, bei der die Veränderung der Wandtemperatur des Kochgefäßes (1) und die Temperaturänderung der Essensmaterialien voneinander divergieren.

10. Kochgerät gemäß einem der Ansprüche 4 oder 9, umfassend ein Essensmaterialien-Temperaturerfassungsmittel (89) zum Ermitteln einer Temperaturveränderung von in das Kochgefäß (1) eingefüllten Essensmaterialien, **dadurch gekennzeichnet, dass** das Antriebssteuermittel den ermittelten Temperaturunterschied der Essensmaterialien berücksichtigt.

## Revendications

1. Appareil de cuisson comprenant :
un récipient de cuisson (1) pour recevoir et cuire des matières alimentaires ;
des moyens de chauffe inférieur (3) agencés sous la partie inférieure du récipient de cuisson (1) ;
une chemise d'échange de chaleur (5) agencée dans une coupe fermée sur la surface de la paroi sur le côté périphérique extérieur plutôt que la partir inférieure du récipient de cuisson (1), afin qu'un fluide thermique soit alimenté dans la coupe fermée de celui-ci, permettant ainsi un échange de chaleur avec la surface de la paroi ; et
des moyens de drainage et d'approvisionnement de fluide (7) pour approvisionner de l'extérieur et drainer le fluide thermique vers et de la chemise d'échange de chaleur (5) ;
les moyens de chauffe inférieur (3) et les moyens de drainage et d'approvisionnement de fluide (7) étant contrôlés séparément ;
**caractérisé en ce que**
les moyens de chauffe inférieur (3) est un quelconque parmi un réchauffeur au gaz (17, 19, 21), un réchauffeur par induction électromagnétique (105), et un réchauffeur électrique, pour chauffer la partir inférieure du récipient de cuisson (1) à des températures élevées.

2. Appareil de cuisson selon la revendication 1, comprenant :
des moyens de détection de poids (9) pour supporter intégralement au moins le récipient de cuisson (1) et la chemise d'échange de chaleur (5) et détecter le poids brut sur le côté du récipient de cuisson (1) et la chemise d'échange de chaleur (5) ;
des moyens de mémoire de changement de poids pour mémoriser, comme une valeur de référence au préalable, un changement de poids correspondant à un changement de teneur en eau au moment de la chauffe, afin d'atteindre l'objet de cuisson des matières alimentaires chargées dans le récipient de cuisson (1) ; et
des moyens de contrôle de commande (11) pour contrôler la commande au moins des moyens de chauffe inférieur (3), basés sur le changement du poids brut détecté par les moyens de détection de poids (9) et la valeur de référence.

3. Appareil de cuisson selon la revendication 1, comprenant :
des moyens de détection de poids (9) pour supporter intégralement au moins le récipient de cuisson (1) et la chemise d'échange de chaleur (5) et détecter le poids brut sur le côté du récipient de cuisson (1) et la chemise d'échange de chaleur (5) ;
des moyens de mémoire de changement de poids (11) pour mémoriser un changement de poids comme une valeur de référence au préalable, afin d'atteindre l'objet de cuisson sans brûler les matières alimentaires chargées dans le récipient de cuisson (1) ; et
des moyens de contrôle de commande (11) pour contrôler la commande des moyens de chauffe (3), basés sur le changement du poids brut détecté par les moyens de détection de poids (9) et la valeur de référence.

4. Appareil de cuisson selon la revendication 1, comprenant :
des moyens de détection de température de la paroi (16) pour détecter la température de la paroi du récipient de cuisson (1) ;
des moyens de mémoire de température de la paroi pour mémoriser, comme valeur de référence, au préalable la température de la paroi du récipient de cuisson (1) déterminée sur la base d'une température à laquelle les matières alimentaires chargées dans le récipient de cuisson (1) sont brûlées ; et
des moyens de contrôle de commande pour contrôler la commande des moyens de chauffe (3), basés sur le changement de température détecté par les moyens de détection de température de la paroi (16) et la valeur de référence.

5. Appareil de cuisson selon l'une quelconque des revendications 1 à 4, **caractérisé en ce que**
les moyens de drainage et d'approvisionnement de fluide (7) approvisionnent et drainent une vapeur d'eau comme le fluide thermique.

6. Appareil de cuisson selon l'une quelconque des revendications 2 ou 3, **caractérisé en ce que**
les moyens de détection de poids (9) sont des cellules de charge fournies pour des pieds (75) d'une base (73) pour supporter au moins le récipient de cuisson (1) et la chemise d'échange de chaleur (5).

7. Appareil de cuisson selon la revendication 2, **caractérisé en ce que**
les moyens de contrôle de commande (11) arrêtent la chauffe au moyen du contrôle de commande, lorsque le changement détecté du poids brut correspond à une teneur en eau cible.

8. Appareil de cuisson selon la revendication 3, **caractérisé en ce que**
le changement de poids pour atteindre l'objet de cuisson sans brûler les matières alimentaires chargées dans le récipient de cuisson (1) est déterminé sur la base d'un poids correspondant à une température à laquelle le changement dans la température de la paroi du récipient de cuisson (1) et le changement de température des matières alimentaires divergent l'un de l'autre.

9. Appareil de cuisson selon la revendication 4, **caractérisé en ce que**
la température à laquelle les matières alimentaires chargées dans le récipient de cuisson (1) sont brûlées est une température à laquelle le changement dans la température de la paroi du récipient de cuisson (1) et le changement de température des matières alimentaires divergent l'un de l'autre.

10. Appareil de cuisson selon l'une quelconque des revendications 4 ou 9, comprenant des moyens de détection de température des matières alimentaires (89) pour détecter un changement de température des matières alimentaires chargées dans le récipient de cuisson (1), **caractérisé en ce que**
les moyens de contrôle de commande prennent en compte le changement de température détecté des matières alimentaires.
